# EUROPÄISCHE PATENTSCHRIFT

(11) **EP 3 280 222 B1**
(45) Veröffentlichungstag und Bekanntmachung des Hinweises auf die Patenterteilung: **02.09.2020**
(21) Anmeldenummer: 17181627.5
(22) Anmeldetag: 17.07.2017
(51) Int. Cl.: H05B 6/10, H05B 6/40, H05B 6/44, B33Y 10/00, B33Y 30/00, B29C 64/295

(54) **INDUKTIONSHEIZVORRICHTUNG, VORRICHTUNG MIT MINDESTENS EINER INDUKTIONSHEIZVORRICHTUNG UND VERFAHREN ZUR INDUKTIVEN ERWÄRMUNG VON BAUELEMENTEN ODER EINES BAUTEILWERKSTOFFS**
INDUCTION HEATING DEVICE, DEVICE WITH AT LEAST ONE INDUCTION HEATING DEVICE AND METHOD FOR HEATING BY INDUCTION OF COMPONENTS OR A COMPONENT MATERIAL
DISPOSITIF DE CHAUFFAGE PAR INDUCTION, DISPOSITIF POURVU D'AU MOINS UN DISPOSITIF DE CHAUFFAGE PAR INDUCTION ET PROCÉDÉ DESTINÉ À CHAUFFER PAR INDUCTION DES ÉLÉMENTS STRUCTURAUX OU UN MATÉRIAU DE COMPOSANT

(30) Priorität: 01.08.2016 DE 102016214170
(43) Veröffentlichungstag der Anmeldung: 07.02.2018
(73) Patentinhaber: MTU Aero Engines AG, 80995 München (DE)
(72) Erfinder: Ladewig, Alexander, 83707 Bad Wiessee (DE); Casper, Johannes, 85737 München (DE); Schlothauer, Steffen, 85253 Erdweg (DE); Liebl, Christian, 85461 Bockhorn (DE); Schlick, Georg, 86156 Augsburg (DE); Bamberg, Joachim, 85221 Dachau (DE); Jakimov, Andreas, 85777 Fahrenzhausen (DE)

(56) Entgegenhaltungen:
- EP-A1- 2 789 413
- EP-A2- 2 913 124
- DE-A1-102014 108 061
- JP-A- 2011 069 500
- US-A1- 2014 265 037

## Beschreibung

Die Erfindung betrifft eine Induktionsheizvorrichtung, insbesondere zur Verwendung in einer Vorrichtung zur additiven Herstellung zumindest eines Bauteilbereichs eines Bauteils, insbesondere eines Bauteils einer Strömungsmaschine, umfassend mindestens eine erste Induktionsspule mit wenigstens einer Windung mit einer vorbestimmten inneren Windungsfläche. Die Erfindung betrifft weiterhin eine Vorrichtung zur additiven Herstellung zumindest eines Bauteilbereichs eines Bauteils und ein Verfahren zur induktiven Erwärmung von Bauelementen oder eines Bauteilwerkstoffs.

Induktionsheizvorrichtungen, Vorrichtungen mit mindestens einer Induktionsheizvorrichtung und Verfahren zur induktiven Erwärmung von Bauelementen oder eines Bauteilwerkstoffs sind in einer großen Vielzahl bekannt. Insbesondere kommen diese auch bei so genannten additiven bzw. generativen Fertigungsverfahren (sog. Rapid Manufacturing- bzw. Rapid Prototyping-Verfahren) zum Einsatz. Bei additiven Fertigungsverfahren wird das Bauteil, bei dem es sich beispielsweise um ein Bauteil einer Strömungsmaschine bzw. eines Flugtriebwerks handeln kann, schichtweise aufgebaut. Vorwiegend metallische Bauteile können beispielsweise durch Laser- bzw. Elektronenstrahlschmelzverfahren hergestellt werden. Dabei wird zunächst schichtweise mindestens ein pulverförmiger Bauteilwerkstoff im Bereich einer Aufbau- und Fügezone aufgetragen, um eine Pulverschicht zu bilden. Anschließend wird der Bauteilwerkstoff lokal verfestigt, indem dem Bauteilwerkstoff im Bereich der Aufbau- und Fügezone Energie mittels wenigstens eines Hochenergiestrahls zugeführt wird, wodurch der Bauteilwerkstoff schmilzt und eine Bauteilschicht bildet. Der Hochenergiestrahl wird dabei in Abhängigkeit einer Schichtinformation der jeweils herzustellenden Bauteilschicht gesteuert. Die Schichtinformationen werden üblicherweise aus einem 3D-CAD-Körper des Bauteils erzeugt und in einzelne Bauteilschichten unterteilt. Nach dem Verfestigen des geschmolzenen Bauteilwerkstoffs wird die Bauplattform schichtweise um eine vordefinierte Schichtdicke abgesenkt. Danach werden die genannten Schritte bis zur endgültigen Fertigstellung des gewünschten Bauteilbereichs oder des gesamten Bauteils wiederholt. Der Bauteilbereich bzw. das Bauteil kann dabei grundsätzlich auf einer Bauplattform oder auf einem bereits erzeugten Teil des Bauteils oder Bauteilbereichs hergestellt werden. Die Vorteile dieser additiven Fertigung liegen insbesondere in der Möglichkeit, sehr komplexe Bauteilgeometrien mit Hohlräumen, Hinterschnitten und dergleichen im Rahmen eines einzelnen Verfahrens herstellen zu können.

Die DE 10 2012 206 122 A1 beschreibt eine Vorrichtung zur generativen Herstellung von Bauteilen mittels einem Laserpulverauftragsschweißen und/oder einem selektiven Bestrahlen eines Pulverbetts, wobei die Vorrichtung mindestens eine relativ zu einem oder mehreren Pulverbetträumen beweglich angeordnete Induktionsspule aufweist. Die Induktionsspulen sind dabei entlang separat ausgebildeter Schienenanordnungen linear verfahrbar. Durch die lokale und individuell auf die Geometrie des herzustellenden Bauteils angepasste induktive Erwärmung des Bauteils ist es möglich, dass Heißrissbildungen, insbesondere bei der Verwendung von Hochtemperaturlegierungen für die generative Fertigung, bei der Herstellung des Bauteils zuverlässig verhindert werden. Aus der DE 10 2014 204 123 A1 ist eine Vorrichtung zum generativen Herstellen eines Bauteils, insbesondere eines Gasturbinentriebwerkbauteils, bekannt, die eine bewegliche Induktionsheizanordnung mit einem ersten und einem zweiten Induktor zum induktiven Temperieren von vorgebbaren Bereichen eines Arbeitsraums umfasst. Die beiden Induktoren sind dabei senkrecht zueinander ausgerichtet, wobei in einer Betriebsstellung der erste Induktor in den zweiten Induktor eingreift ("Kreuzspulenkonzept"). Die Vorerwärmung des Bauteilwerkstoffs sowie des bereits aufgebauten Materials beziehungsweise der bereits aufgebauten Bauteilschichten bei der additiven Fertigung mit Kreuzspulenunterstützung hängt jedoch wesentlich von den Größenverhältnissen zwischen Induktor und Bauteilgeometrie ab. Dabei bestimmt der kleinere zweite Induktor die minimal aufheizbare Fläche der Bauteilschicht, der größere erste Induktor die maximal aufheizbare Fläche der Bauteilschicht. Es kann also nur zwischen einer minimalen und einer maximal zu erwärmenden Fläche gewählt werden. Andere Flächen oder Geometrien, die davon unterschiedliche Größen aufweisen, können nur über einen Austausch der Induktoren gleichmäßig erwärmt werden. Eine gleichmäßige Erwärmung ist aber von entscheidender Bedeutung für die Qualität des fertiggestellten Bauteils. Bisherige Verfahren und Vorrichtung passen die Geometrie der Induktionsspule an die jeweilige Heizsituation an. Ein Wechsel oder eine Anpassung der Induktionsspulen bei jeder Veränderung der Geometrie und/oder des Querschnitts des herzustellenden Bauteils ist jedoch aufwändig und unwirtschaftlich. Aus der DE 10 2014 108 061 A1 ist ein Verfahren und eine Vorrichtung zur generativen Herstellung zumindest eines Bauteilbereichs eines Bauteils bekannt, wobei an der verwendeten Heizvorrichtung mindestens eine Absaug- und/oder Gaszuführungsvorrichtung angeordnet ist. Aus der EP 1 330 087 A1 ist eine Vorrichtung zur generativen Herstellung von Bauteilen mittels selektivem Bestrahlen eines Pulverbetts bekannt, bei dem eine Induktionsspule relativ zu einem oder mehreren Pulverbetträumen bewegbar ist. Aus der EP 2 913 124 A2 ist ein Verfahren zur generativen Herstellung von Bauteilen bekannt, bei dem im Erstarrungsbereich die Temperaturverteilung zeitlich und/oder örtlich so gewählt wird, dass im erstarrten oder erstarrenden Pulvermaterial Druckeigenspannungen entstehen. Aus der US2014/0265037 A1 ist ein induktiv beheizbarer Extruder bekannt. Aus der JP 2011 069600A1 ist eine induktive Heiz- und Trockenvorrichtung bekannt.

Es ist daher Aufgabe der vorliegenden Erfindung eine gattungsgemäße Induktionsheizvorrichtung, eine gattungsgemäße Vorrichtung zur additiven Herstellung zumindest eines Bauteilbereichs eines Bauteils und ein gattungsgemäßes Verfahren zur induktiven Erwärmung von Bauelementen oder eines Bauteilwerkstoffs bereitzustellen, bei denen eine gleichmäßige Erwärmung eines Bauteilwerkstoffs und der daraus herzustellenden Bauteile und Bauteilschichten unabhängig von deren Querschnitt und/oder Geometrie in einer wirtschaftlichen Art und Weise gewährleistet ist. Eine weitere Aufgabe der Erfindung besteht darin, ein entsprechend gefertigtes Bauteil mit einer verbesserten Qualität bereitzustellen.

Die Aufgaben werden erfindungsgemäß durch eine Induktionsheizvorrichtung mit den Merkmalen des Patentanspruchs 1, durch eine Vorrichtung mit den Merkmalen des Patentanspruchs 10 sowie durch ein Verfahren mit den Merkmalen des Patentanspruchs 12 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft eine Induktionsheizvorrichtung zur Verwendung in einem Verfahren zur induktiven Erwärmung von Bauelementen oder eines Bauteilwerkstoffs, insbesondere zur Verwendung in einer Vorrichtung zur additiven Herstellung zumindest eines Bauteilbereichs eines Bauteils und wiederum insbesondere zur Herstellung eines Bauteils einer Strömungsmaschine, umfassend mindestens eine erste Induktionsspule mit wenigstens einer Windung mit einer vorbestimmten inneren Windungsfläche. Dabei weist die Induktionsheizvorrichtung zudem mindestens ein relativ zur ersten Induktionsspule bewegbares Induktionsspulenpaket mit wenigstens zwei Induktionsspulen auf, wobei die Induktionsspulen des Induktionsspulenpaketes jeweils wenigstens eine Windung mit vorbestimmten inneren Windungsflächen aufweisen und die jeweiligen inneren Windungsflächen der einzelnen Induktionsspulen des Induktionsspulenpaketes kleiner sind als die innere Windungsfläche der ersten Induktionsspule. Durch die unterschiedliche Ausgestaltung der inneren Windungsflächen der unterschiedlichen Induktionsspulen des Induktionsspulenpaketes erübrigt sich eine aufwendige und zeitintensive Umrüstung der Induktionsspulen zur Bereitstellung unterschiedlicher Aufheizflächen des Bauteilwerkstoffs oder eines daraus herzustellenden Bauelements bzw. dessen unterschiedliche Bauteilschichten. Durch die Bereitstellung mehrerer unterschiedlicher innerer Windungsflächen der einzelnen Induktoren des Induktionsspulenpaketes ist ein Wechsel oder eine Anpassung der Induktionsspulen bei Veränderungen und/oder des Querschnitts des herzustellenden Bauteils nicht mehr notwendig, um dennoch eine gleichmäßige Erwärmung des Bauteilwerkstoffs oder der einzelnen Bauteilschichten des herzustellenden Bauteils zu gewährleisten. So können beispielsweise die Größen der inneren Windungsflächen der unterschiedlichen Induktionsspulen auf unterschiedliche Wandstärken des herzustellenden Bauteils ausgelegt werden. Beispielsweise kann bei der Vorerwärmung des bereits aufgebauten Bauteilwerkstoffs während der additiven Fertigung mit Kreuzspulenunterstüzung die erste Induktionsspule mit der größten inneren Windungsfläche für die Einstellung einer Grundtemperatur und die jeweiligen Induktionsspulen des Induktionsspulenpaketes mit jeweils kleineren inneren Windungsflächen für die gezielte Aufheizung des Bauteilwerkstoffs im Schweißbereich, das heißt im Bereich eines auf den Bauteilwerkstoff auftreffenden Hochenergiestrahls, wie zum Beispiel einem Laserstrahl, erfolgen. Der erfindungsgemäße Aufbau der Induktionsspule garantiert eine gleichmäßige Vorerwärmung des Bauteilwerkstoffs unabhängig von der Geometrie der bereits aufgebauten Bauteilschichten. Zudem verbessern sich durch die gleichmäßige Vorerwärmung des Bauteilwerkstoffs dessen Werkstoffeigenschaften, sodass letztendlich die Qualität des hergestellten Bauteils deutlich verbessert wird. Zudem wird durch die erfindungsgemäße Induktionsheizvorrichtung die Prozessstabilität deutlich verbessert. Dabei wird unter dem Begriff "innere Windungsfläche" die in der Draufsicht auf die mindestens eine Windung sichtbare Fläche zwischen den Schenkeln der jeweiligen Induktionsspule in einer Ebene verstanden. Die "innere Windungsfläche" wird dabei durch die Innenseiten der Windung oder durch die Innenseiten der Windung und einem anderen Element der Induktionsspule begrenzt. Zudem besteht die Möglichkeit, dass die Windungen zumindest an einer Seite offen gestaltet sind, wobei hierbei unter "innere Windungsfläche" die in der Draufsicht auf die Windung sichtbare Fläche zwischen den Schenkeln der jeweiligen Windung der jeweiligen Induktionsspule angesehen wird.

In weiteren vorteilhaften Ausgestaltungen der erfindungsgemäßen Induktionsheizvorrichtung weisen mindestens zwei innere Windungsflächen der einzelnen Induktionsspulen des Induktionsspulenpaketes unterschiedliche Größen auf. Des Weiteren soll die Größe der inneren Windungsflächen einer relativen Größe eines relativen Wirkfeldes der einzelnen Induktionsspulen entsprechen. Schließlich besteht die Möglichkeit, dass die Windungen der Induktionsspulen nebeneinander und/oder ineinander in einer Ebene und/oder in unterschiedlichen Ebenen oder übereinander in unterschiedlichen Ebenen zueinander angeordnet sind. Schließlich kann wenigstens eine der Induktionsspulen der erfindungsgemäßen Induktionsheizvorrichtung mehrere übereinander angeordnete Windungen aufweisen und/oder die Induktionsspulen der erfindungsgemäßen Induktionsheizvorrichtung gleiche oder unterschiedliche Windungszahlen umfassen. Es wird deutlich, dass eine Vielzahl von Ausgestaltungsmöglichkeiten der einzelnen Induktionsspulen sowohl der ersten Induktionsspule wie auch der Induktionsspulen des Induktionsspulenpaketes möglich ist. Vorteilhafterweise kann die Ausgestaltung wie auch die Anzahl der Induktionsspulen, insbesondere die Anzahl der Induktionsspulen des Induktionsspulenpaketes den jeweiligen Anforderungen, insbesondere bei der Verwendung in einer Vorrichtung zur additiven Herstellung von Bauteilen, angepasst werden. So werden insbesondere die Größe der inneren Windungsflächen sowie die Anzahl der Induktionsspulen des Induktionsspulenpaketes der Komplexität der Geometrie des herzustellenden Bauteils angepasst. So kann die Anzahl und Größe der Induktionsspulen des Induktionsspulenpaketes zum Beispiel auf unterschiedliche Wandstärken des herzustellenden Bauteils ausgelegt sein. Beispielsweise weist das Induktionsspulenpaket drei Induktionsspulen auf, wobei eine dieser Induktionsspulen eine maximale Streifenbreite des additiven Fertigungsverfahrens, insbesondere eines selektiven Laserschmelz-Verfahrens (SLM-Verfahren), in einem Bereich von ca. 10 mm abdeckt. Die beiden anderen Induktionsspulen können für Wandstärken zwischen ungefähr 3 bis 7 mm und für sehr dünnwandige Wandstärken oder Körper kleiner 3 mm ausgelegt sein.

In weiteren vorteilhaften Ausgestaltungen der erfindungsgemäßen Induktionsheizvorrichtung sind die erste Induktionsspule und/oder das Induktionsspulenpaket und/oder die einzelnen Induktionsspulen des Induktionsspulenpakets verfahrbar ausgebildet. Dabei kann wenigstens eine Windung der ersten Induktionsspule und/oder wenigstens eine Windung des Induktionsspulenpaketes in einer Ebene ungefähr parallel zu einer Bauplattform der Vorrichtung zur additiven Herstellung von Bauteilen und/oder ungefähr senkrecht dazu verfahrbar ausgebildet sein. Auch andere Bewegungsrichtungen sind denkbar und richten sich insbesondere nach den vorgegebenen Bauteilgeometrien. Die Verfahrbarkeit der einzelnen Induktionsspulen und/oder des Induktionsspulenpaketes kann durch eine manuelle und/oder motorische Verstellbarkeit, insbesondere Verschiebbarkeit, durchgeführt werden. Hierdurch können wahlweise unterschiedliche zu temperierende Bereiche vorgegeben und temperiert werden. In einer vorteilhaften Ausgestaltung der erfindungsgemäßen Induktionsheizvorrichtung weist diese mindestens eine Steuereinheit zur Steuerung der Position der Induktionsspulen zueinander oder innerhalb der Vorrichtung zur additiven Herstellung von Bauteilen auf. Insbesondere ist dabei die Steuereinheit dazu ausgelegt, die Position der ersten Induktionsspule sowie des Induktionsspulenpaketes und/oder der einzelnen Induktionsspulen des Induktionsspulenpaketes zueinander und damit die Ausgestaltung einer Aufbau- und Fügezone dem Querschnitt und/oder der Geometrie eines aus dem Bauteilwerkstoff herzustellenden Bauteils, anzupassen. Die Steuereinheit kann zudem programmierbar ausgebildet sein, sodass bereits vor dem induktiven Erwärmen des Bauteilwerkstoffs oder der jeweiligen Bauteilschichten die entsprechenden Bewegungsabläufe der einzelnen Induktionsspulen zueinander entsprechend dem Querschnitt und/oder der Geometrie des herzustellenden Bauteils vorbestimmt werden können. Des Weiteren kann die Steuereinheit dazu ausgelegt sein, einzelne oder mehrere Induktionsspulen hintereinander oder gleichzeitig zu aktivieren oder zu Deaktivieren. Der Aktivierungs- und/oder Deaktivierungsvorgang kann dabei vor, während oder nach dem Verfahren einzelner oder mehrerer Induktionsspulen und/oder beispielsweise vor, während oder nach einem Belichten mindestens einer Bauteilschicht während eines additiven Aufbaus eines Bauteils, erfolgen. Vorteilhafterweise ist damit ein automatisierter Verfahrensablauf möglich.

In weiteren vorteilhaften Ausgestaltungen der erfindungsgemäßen Induktionsheizvorrichtung weisen die Induktionsspulen des Induktionsspulenpaketes eine in der Draufsicht beziehungsweise im Windungsquerschnitt kreisförmige, halbkreisförmige, ovale, U-förmige, V-förmige, hufeisenförmige, quadratische, rechteckige oder vieleckige Windungsgeometrie auf. Auch andere Formen sind denkbar, wobei sowohl geschlossene wie auch offene Formen denkbar sind. Die Windungsgeometrien können dabei den geometrischen Anforderungen des zu erwärmenden Bauteilabschnitts bzw. der zu erwärmenden Bauteilschicht oder des sich im Wirkbereich der Induktion befindlichen Bauteilabschnitts optimal angepasst werden. Entsprechendes gilt natürlich auch für die erste Induktionsspule der Induktionsheizvorrichtung.

Ein zweiter Aspekt der Erfindung betrifft eine Vorrichtung zur additiven Herstellung zumindest eines Bauteilbereichs eines Bauteils, insbesondere eines Bauteils einer Strömungsmaschine, wobei die Vorrichtung mindestens eine Induktionsheizvorrichtung zum Erwärmen eines Bauteilwerkstoffs und/oder einer daraus hergestellten Bauteilschicht vor, während und/oder nach der Belichtung mittels eines Hochenergiestrahls gemäß den im Vorhergehenden beschriebenen Merkmalen aufweist. Insbesondere umfasst die Induktionsheizvorrichtung wiederum mindestens eine erste Induktionsspule mit wenigstens einer Windung mit einer vorbestimmten inneren Windungsfläche sowie mindestens ein relativ zur ersten Induktionsspule bewegbares Induktionsspulenpaket mit wenigstens zwei Induktionsspulen, wobei die Induktionsspulen des Induktionsspulenpaketes jeweils wenigstens eine Windung mit vorbestimmten inneren Windungsflächen aufweisen und die jeweiligen inneren Windungsflächen der einzelnen Induktionsspulen des Induktionsspulenpaketes kleiner sind als die innere Windungsfläche der ersten Induktionsspule. Dadurch besteht vorteilhafterweise die Möglichkeit, den Wirkbereich der einzelnen Induktionsspulen an den Querschnitt und/oder die Geometrie des Bauteilwerkstoffs eines herzustellenden Bauteils oder des herzustellenden Bauteils innerhalb jeder Bauteilschicht ohne weiteres anzupassen. Dadurch können diese Bereiche homogen erwärmt werden, wodurch sich insbesondere eine verbesserte Qualität des herzustellenden Bauteils ergibt. Zudem ermöglicht die erfindungsgemäße Vorrichtung kürzere Fertigungszeiten, da eine Umrüstung der einzelnen Induktionsspulen zur Anpassung an den Querschnitt und/oder die Geometrie des herzustellenden Bauteils nicht mehr notwendig ist.

In einer weiteren vorteilhaften Ausgestaltung der erfindungsgemäßen Vorrichtung umfasst diese mindestens eine Temperaturmesseinrichtung für eine kontinuierliche oder nicht kontinuierliche Temperaturmessung des Bauteilwerkstoffs und/oder der Bauteilschicht zumindest im Bereich einer Aufbau- und Fügezone der Vorrichtung. Durch die Temperaturmesseinrichtung kann vorteilhafterweise die Temperatur innerhalb der Aufbau- und Fügezone kontrolliert werden. Bei Abweichungen kann zum Beispiel durch eine Bewegung der Induktionsspulen relativ zueinander und/oder durch das Aktivieren oder Abschalten jeweiliger Induktionsspulen die Intensität des induktiven Erwärmungsfeldes variiert und angepasst werden. Dies resultiert vorteilhafterweise in einer homogeneren Ausprägung des induktiven Temperaturfeldes während der gesamten additiven Herstellung des Bauteils.

Weitere Merkmale und Vorteile der Vorrichtung gemäß dem zweiten Erfindungsaspekt gehen aus der Beschreibung des ersten Erfindungsaspekts hervor, wobei vorteilhafte Ausgestaltungen des ersten Erfindungsaspekts als vorteilhafte Ausgestaltungen des zweiten Erfindungsaspekts und umgekehrt anzusehen sind.

Ein dritter Aspekt der Erfindung betrifft ein Verfahren zur induktiven Erwärmung von Bauelementen oder eines Bauteilwerkstoffs, insbesondere zur Herstellung eines Bauteils einer Strömungsmaschine, umfassend zumindest folgende Schritte: Bereitstellung wenigstens einer Induktionsheizvorrichtung umfassend mindestens eine erste Induktionsspule mit wenigstens einer Windung mit einer vorbestimmten inneren Windungsfläche und mindestens ein relativ zur ersten Induktionsspule bewegbares Induktionsspulenpaket mit wenigstens zwei Induktionsspulen, wobei die Induktionsspulen des Induktionsspulenpaketes jeweils wenigstens eine Windung mit vorbestimmten inneren Windungsflächen aufweisen und die jeweiligen inneren Windungsflächen der einzelnen Induktionsspulen des Induktionsspulenpaketes kleiner sind als die innere Windungsfläche der ersten Induktionsspule und Verfahren und Aktivieren der ersten Induktionsspule und/oder wenigstens einer Induktionsspule des Induktionsspulenpaketes zur zumindest teilweisen induktiven Erwärmung von unterschiedliche Querschnitte und/oder Geometrien aufweisenden Bauteilabschnitten des aus dem Bauteilwerkstoff herzustellenden Bauelements oder einer Bauteilschicht des Bauelements vor, während und/oder nach der Belichtung mittels eines Hochenergiestrahls. Bei dem erfindungsgemäßen Verfahren entfällt die Notwendigkeit eines Austausches oder einer Nachrüstung der einzelnen Induktionsspulen um eine gleichmäßige Erwärmung der unterschiedlichen Querschnitte und/oder Geometrien der jeweiligen Bauteilabschnitte des aus dem Bauteilwerkstoff herzustellenden Bauelements oder der jeweiligen Bauteilschicht des Bauelements mittels der Induktionsspulen zu erzielen. Dadurch können die Fertigungszeiten deutlich verringert werden, zudem garantiert das erfindungsgemäße Verfahren eine deutlich höhere Prozessstabilität, da hier weniger Herstellungsschritte, insbesondere Umrüstschritte, notwendig sind. Zudem ist gewährleistet, dass eine homogene Wärmeverteilung auf variablen Flächen durchgeführt werden kann. Die jeweiligen Induktionsspulen können dabei unabhängig voneinander bewegt werden. Es besteht zudem die Möglichkeit, dass nur eine der Induktionsspulen gegenüber den anderen Induktionsspulen verfahrbar ist. Zudem besteht die Möglichkeit, dass die Wärmeverteilung in zu mindestens einem Teil einer Aufbau- und Fügezone einer Vorrichtung zur additiven Herstellung zumindest eines Bauteilbereichs des Bauteils mittels mindestens einer Temperaturmesseinrichtung gemessen wird. Aufgrund der gemessenen Temperaturdaten kann die Stellung der einzelnen Induktionsspulen zueinander jederzeit geändert werden, um auch bei unterschiedlichen Querschnitten und/oder Geometrien der herzustellenden Bauteile eine annähernd homogene Wärmeverteilung in zumindest der genannten Aufbau- und Fügezone zu erzielen.

In weiteren vorteilhaften Ausgestaltungen des erfindungsgemäßen Verfahrens wird das Verfahren und die Aktivierung der ersten Induktionsspule und/oder der jeweiligen Induktionsspulen des Induktionsspulenpaketes jeweils in Abhängigkeit des Querschnitts und/oder der Geometrie der herzustellenden Bauteilschicht gesteuert, derart, dass eine Aktivierung einer Induktionsspule entsprechend dem Verhältnis der Größe ihrer inneren Windungsfläche zur Größe der zu erwärmenden Fläche und/oder zu erwärmenden Bereichs des Bauteilwerkstoffs oder der Bauteilschicht oder des Bauteilabschnitts erfolgt. Dabei können Induktionsspulen mit größeren inneren Windungsflächen zur Erwärmung größerer Flächen und/oder Bereiche des Bauteilwerkstoffs oder der Bauteilschicht oder des Bauteilabschnitts und Induktionsspulen mit kleineren inneren Windungsflächen zur Erwärmung kleinerer Flächen und/oder Bereiche des Bauteilwerkstoffs oder der Bauteilschicht oder des Bauteilabschnitts aktiviert werden. Dadurch ist eine gleichmäßige Erwärmung des Bauteilwerkstoffs, der jeweiligen Bauteilschicht bzw. des jeweiligen Bauteilabschnitts unabhängig von dessen Geometrie oder der Geometrie des bereits aufgebauten Materials gewährleistet. Eine gleichmäßige Erwärmung führt aber zu einer Verbesserung der Werkstoffeigenschaften der herzustellenden Bauteils und damit dessen Qualität. Unter "zu erwärmenden Fläche und/oder zu erwärmenden Bereichs des Bauteilwerkstoffs oder der Bauteilschicht oder des Bauteilabschnitts" wird dabei nicht nur eine zweidimensionale Erstreckung beziehungsweise Ausdehnung des Wärmeeintrags sondern auch eine entsprechende dreidimensionale Erstreckung beziehungsweise Ausdehnung des Wärmeeintrags, die einem Wirkbereich der jeweiligen Induktionsspule entspricht, verstanden.

Weitere Merkmale und deren Vorteile des Verfahrens gemäß dem dritten Erfindungsaspekts gehen aus der Beschreibung des ersten und des zweiten Erfindungsaspekts hervor, wobei vorteilhafte Ausgestaltungen des ersten und zweiten Erfindungsaspekts als vorteilhafte Ausgestaltungen des dritten Erfindungsaspekts und umgekehrt anzusehen sind.

Die Erfindung umfasst auch ein Bauteil für eine Strömungsmaschine, insbesondere ein Verdichter- oder Turbinenbauteil, wobei eine hohe Oberflächenqualität des Bauteils erfindungsgemäß dadurch sichergestellt wird, dass dieses zumindest bereichsweise oder vollständig mittels einer Induktionsvorrichtung gemäß dem ersten Erfindungsaspekt und/oder mittels einer Vorrichtung gemäß dem zweiten Erfindungsaspekt und/oder einem Verfahren gemäß dem dritten Erfindungsaspekt erhalten ist. Die sich hieraus ergebenden Merkmale und deren Vorteile gehen aus der Beschreibung des ersten, zweiten und dritten Erfindungsaspekts hervor, wobei vorteilhafte Ausgestaltungen des ersten, zweiten und dritten Erfindungsaspekts als vorteilhafte Ausgestaltungen des vierten Erfindungsaspekts und umgekehrt anzusehen sind.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:
- Fig. 1: eine schematische Aufsicht auf eine erfindungsgemäße Induktionsheizvorrichtung gemäß einem ersten Ausführungsbeispiel in einer ersten Betriebsstellung;
- Fig. 2: eine schematische Aufsicht auf eine erfindungsgemäße Induktionsheizvorrichtung gemäß Figur 1 in einer zweiten Betriebsstellung;
- Fig. 3: eine schematische Aufsicht auf ein Induktionsspulenpaket einer erfindungsgemäße Induktionsheizvorrichtung gemäß einem zweiten Ausführungsbeispiel; und
- Fig. 4a und 4b: schematische Aufsichten auf Induktionsspulenpakete erfindungsgemäßer Induktionsheizvorrichtung gemäß einem dritten und vierten Ausführungsbeispiel.

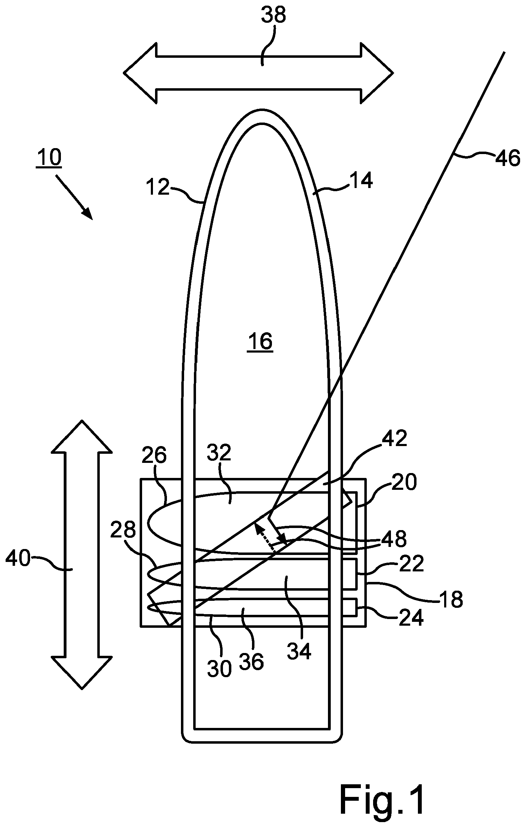

Fig. 1 zeigt eine schematische Aufsicht auf eine Induktionsheizvorrichtung 10 gemäß einem ersten Ausführungsbeispiel in einer ersten Betriebsstellung. Die Induktionsheizvorrichtung 10 dient dabei insbesondere zur Verwendung in einer Vorrichtung zur additiven Herstellung zumindest eines Bauteilbereichs eines Bauteils, insbesondere zur Herstellung eines Bauteils einer Strömungsmaschine. Die Induktionsheizvorrichtung 10 umfasst dabei eine erste Induktionsspule 12 mit einer Windung 14 mit einer vorbestimmten inneren Windungsfläche 16. Die Windung 14 zeigt dabei in der Draufsicht auf die Windung eine hufeisenförmige geschlossene Geometrie. Man erkennt, dass die Induktionsheizvorrichtung 10 zudem ein relativ zur ersten Induktionsspule 12 bewegbares Induktionsspulenpaket 18 mit drei Induktionsspulen 20, 22, 24 umfasst. Die Induktionsspulen 20, 22, 24 weisen wiederum wenigstens eine Windung 26, 28, 30 mit vorbestimmten inneren Windungsflächen 32, 34, 36 auf. Die Induktionsspulen 20, 22, 24 weisen ebenfalls in der Draufsicht eine hufeisenförmige, geschlossene Geometrie auf. Zudem wird deutlich, dass die inneren Windungsflächen 32, 34, 36 kleiner sind als die innere Windungsfläche 16 der ersten Induktionsspule 12. Zudem weisen die Induktionsspulen 20, 22, 24 des Induktionsspulenpaketes 18 innere Windungsflächen 32, 34, 36 auf, deren Größe auch untereinander unterschiedlich ausgebildet ist.

Man erkennt, dass die innerhalb des Induktionsspulenpaketes 18 angeordnete Induktionsspule 26 mit der im Vergleich zu den anderen Induktionsspulen 22, 24 größten inneren Windungsfläche 32 zur Erwärmung einer relativ breiten Bauteilschicht 42 verwendet wird. Es kann sich dabei um eine relativ größere Wandstärke des herzustellenden Bauteils handeln.

Des Weiteren erkennt man, dass die Aufschmelzung des Bauteilwerkstoffs (nicht dargestellt) in üblicher Art und Weise mittels eines Laserstrahls 46, der entlang der Laserspulenspuren 48 zur Ausbildung der Bauteilschicht 42 geführt wird, erfolgt. Bei dem Bauteilwerkstoff kann es sich um einen metallischen und/oder keramischen Werkstoff handeln. Des Weiteren erkennt man, dass sowohl die erste Induktionsspule 12 wie auch das Induktionsspulenpaket 18 beweglich, das heißt verfahrbar ausgebildet sind. Über die Bewegungspfeile 38, 40 wird die Beweglichkeit der Induktionsspule 12 sowie des Induktionsspulenpaketes 18 dargestellt.

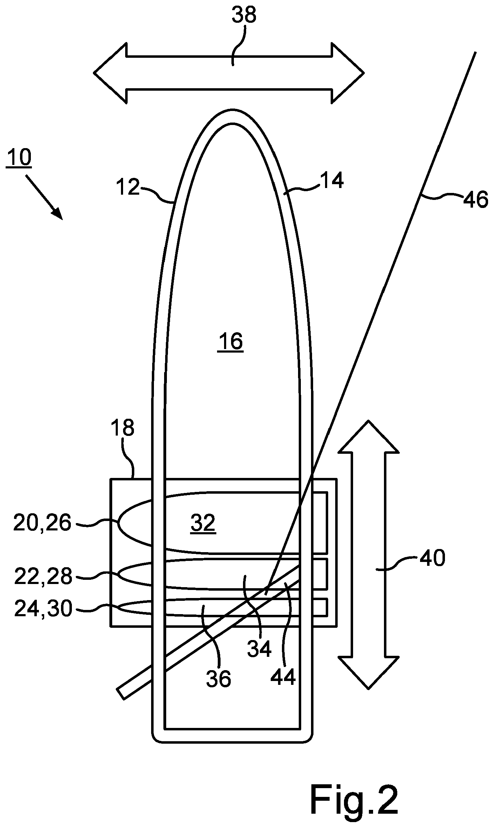

Fig. 2 zeigt eine schematische Aufsicht auf die Induktionsheizvorrichtung 10 gemäß Fig. 1 in einer zweiten Betriebsstellung. Hierbei ist die Aktivierung der Induktionsspule 24 des Induktionsspulenpaketes 18 dargestellt. Die Induktionsspule 24 weist innerhalb des Induktionsspulenpaketes 18 die kleinste innere Windungsfläche auf. Dadurch ist die Induktionsspule 24 geeignet, Bauteilschichten 44 mit geringeren Flächenmaßen homogen zu erwärmen. Im Gegensatz zu dem in Fig. 1 dargestellten Ausführungsbeispiel bzw. der dort dargestellten Betriebsstellung ist hierbei nur die Induktionsspule 24 und nicht die größere Induktionsspule 20 des Induktionsspulenpaketes 18 aktiviert. Bezüglich der weiteren in Fig. 2 dargestellten Merkmale verweisen wir auf die Beschreibung der Fig. 1, wobei identische Bezugszeichen identische Elemente der Induktionsheizvorrichtung 10 bezeichnen.

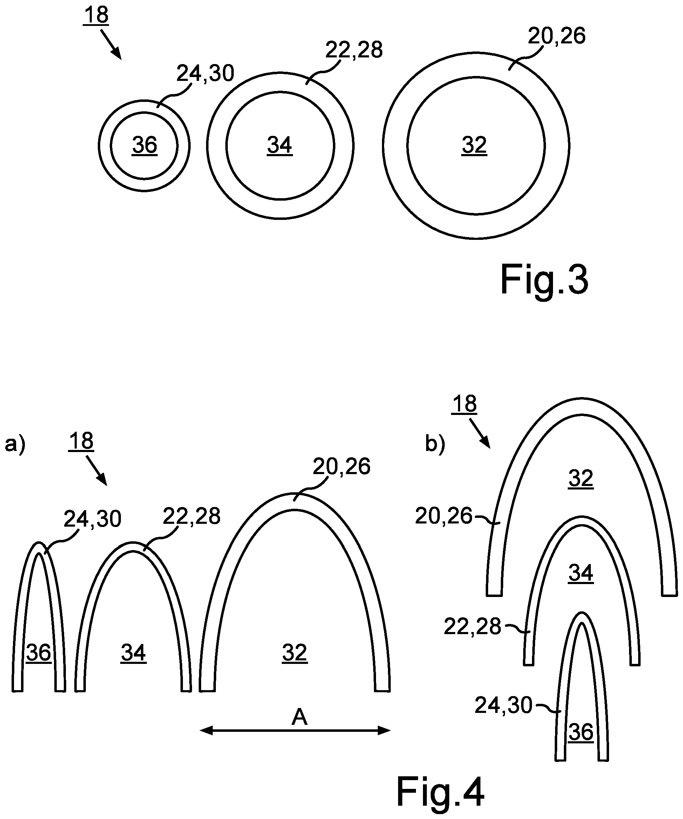

Fig. 3 zeigt eine schematische Aufsicht auf ein Induktionsspulenpaket 18 einer Induktionsheizvorrichtung 10 gemäß einem zweiten Ausführungsbeispiel. Man erkennt, dass die Induktionsspulen 20, 22, 24 kreisförmig geschlossene Windungen 26, 28, 30 ausbilden. Die kreisförmigen Windungen 26, 28, 30 begrenzen und definieren die inneren Windungsflächen 32, 34, 36. Man erkennt, dass in diesem Ausführungsbeispiel die Induktionsspulen 20, 22, 24 nebeneinander angeordnet sind. Auch andere Anordnungen, zum Beispiel ineinander oder in unterschiedlichen Ebenen übereinander und/oder nebeneinander sind denkbar. Entsprechendes gilt für die in den Fig. 4a und 4b in entsprechenden schematischen Aufsichten dargestellten Induktionsspulenpakete 18 der Induktionsheizvorrichtung 10 gemäß einem dritten und vierten Ausführungsbeispiel. Man erkennt, dass im Unterschied zu den im Vorhergehenden beschriebenen Ausführungsbeispielen der Induktionsheizvorrichtung 10 die Induktionsspulen 20, 22, 24 des Induktionsspulenpaketes 18 hufeisenförmige, offene Geometrien in ihrer Draufsicht bzw. im Querschnitt aufweisen. Die inneren Windungsflächen 32, 34, 36 werden dabei durch die Flächen zwischen den jeweiligen Schenkeln der Windungen 26, 28, 30 begrenzt und definiert. Der Abstand zwischen den Schenkeln kann dabei zwischen 4 und 90 mm betragen. Entsprechendes gilt für die in der Fig. 3 dargestellten kreisförmigen Windungen, die ebenfalls einen Durchmesser von ca. 4 bis 90 mm aufweisen können. In den Fig. 4a und 4b sind unterschiedliche Anordnungen der Induktionsspulen 20, 22, 24 zueinander innerhalb des Induktionsspulenpaketes 18 dargestellt. Fig. 4a zeigt eine Anordnung der Induktionsspulen 20, 22, 24 nebeneinander, Fig. 4b eine entsprechende Anordnung der Induktionsspulen 20, 22, 24 zumindest teilweise ineinander.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, DIN-Toleranzen und dergleichen - als vom Rahmen der Erfindung mitumfasst anzusehen.

### Bezugszeichenliste:

- 10: Vorrichtung
- 12: Erste Induktionsspule
- 14: Windung
- 16: Innere Windungsfläche
- 18: Induktionsspulenpaket
- 20: Induktionsspule
- 22: Induktionsspule
- 24: Induktionsspule
- 26: Windung
- 28: Windung
- 30: Windung
- 32: Innere Windungsfläche
- 34: Innere Windungsfläche
- 36: Innere Windungsfläche
- 38: Bewegungspfeil
- 40: Bewegungspfeil
- 42: Erste Bauteilschicht
- 44: Zweite Bauteilschicht
- 46: Laserstrahl
- 48: Laserspuren

## Patentansprüche

1. Induktionsheizvorrichtung, insbesondere zur Verwendung in einer Vorrichtung zur additiven Herstellung zumindest eines Bauteilbereichs eines Bauteils, insbesondere eines Bauteils einer Strömungsmaschine, umfassend mindestens eine erste Induktionsspule (12) mit wenigstens einer Windung (14) mit einer vorbestimmten inneren Windungsfläche (16),
**dadurch gekennzeichnet, dass**
die Induktionsheizvorrichtung (10) mindestens ein relativ zur ersten Induktionsspule (12) bewegbares Induktionsspulenpaket (18) mit wenigstens zwei Induktionsspulen (20, 22, 24) umfasst, wobei die Induktionsspulen (20, 22, 24) des Induktionsspulenpakets (18) jeweils wenigstens eine Windung (26, 28, 30) mit vorbestimmten inneren Windungsflächen (32, 34, 36) aufweisen und die jeweiligen inneren Windungsflächen (32, 34, 36) der einzelnen Induktionsspulen (20, 22, 24) des Induktionsspulenpakets (18) kleiner sind als die innere Windungsfläche (16) der ersten Induktionsspule (12).

2. Induktionsheizvorrichtung nach Anspruch 1,
**dadurch gekennzeichnet, dass**
mindestens zwei innere Windungsflächen (32, 34, 36) der einzelnen Induktionsspulen (20, 22, 24) des Induktionsspulenpakets (18) unterschiedliche Größen aufweisen.

3. Induktionsheizvorrichtung nach Anspruch 1 oder 2,
**dadurch gekennzeichnet, dass**
die Größe der inneren Windungsflächen (16, 32, 34, 36) einer relativen Größe eines jeweiligen Wirkfeldes der einzelnen Induktionsspulen (12, 20, 22, 24) entspricht.

4. Induktionsheizvorrichtung nach einem der vorhergehenden Ansprüche,
**dadurch gekennzeichnet, dass**
die Windungen (16, 26, 28, 30) der Induktionsspulen (12, 20, 22, 24) nebeneinander und/oder ineinander in einer Ebene und/oder in unterschiedlichen Ebenen oder übereinander in unterschiedlichen Ebenen zueinander angeordnet sind.

5. Induktionsheizvorrichtung nach einem der vorhergehenden Ansprüche,
**dadurch gekennzeichnet, dass**
wenigstens eine der Induktionsspulen (12, 20, 22, 24) mehrere übereinander angeordnete Windungen aufweist und/oder die Induktionsspulen (12, 20, 22, 24) der Vorrichtung (10) gleiche oder unterschiedliche Windungszahlen aufweisen.

6. Induktionsheizvorrichtung nach einem der vorhergehenden Ansprüche,
**dadurch gekennzeichnet, dass**
die erste Induktionsspule (12) und/oder das Induktionsspulenpaket (18) und/oder die einzelnen Induktionsspulen (22, 24, 26) des Induktionsspulenpakets (18) verfahrbar ausgebildet sind.

7. Induktionsheizvorrichtung nach einem der vorhergehenden Ansprüche,
**dadurch gekennzeichnet, dass**
wenigstens eine Windung (14) der ersten Induktionsspule (12) und/oder wenigstens eine Windung (26, 28, 30) des Induktionsspulenpakets (18) in einer Ebene ungefähr parallel zu einer Bauplattform der Vorrichtung zur additiven Herstellung von Bauteilen und/oder ungefähr senkrecht dazu verfahrbar ausgebildet ist.

8. Induktionsheizvorrichtung nach einem der vorhergehenden Ansprüche,
**dadurch gekennzeichnet, dass**
die Induktionsheizvorrichtung (10) mindestens eine Steuereinheit zur Steuerung der Position der Induktionsspulen (12, 20, 22, 24) zueinander und/oder zur Aktivierung und Deaktivierung der Induktionsspulen (12, 20, 22, 24) umfasst.

9. Induktionsheizvorrichtung nach einem der vorhergehenden Ansprüche,
**dadurch gekennzeichnet, dass**
die Induktionsspulen (20, 22, 24) des Induktionsspulenpakets (18) eine in der Draufsicht kreisförmige, halbkreisförmige, ovale, U-förmige, V-förmige, hufeneisenförmige, quadratische, rechteckige oder vieleckige Windungsgeometrie aufweisen.

10. Vorrichtung zur additiven Herstellung zumindest eines Bauteilbereichs eines Bauteils, insbesondere eines Bauteils einer Strömungsmaschine, umfassend mindestens eine Induktionsheizvorrichtung (10) zum Erwärmen eines Bauteilwerkstoffs und/oder einer daraus hergestellten Bauteilschicht (42, 44) vor, während und/oder nach der Belichtung mittels eines Hochenergiestrahls (46), gemäß den Ansprüchen 1 bis 9.

11. Vorrichtung nach Anspruch 10,
**dadurch gekennzeichnet, dass**
die Vorrichtung mindestens eine Temperaturmesseinrichtung für eine kontinuierliche oder nicht kontinuierliche Temperaturmessung des Bauteilwerkstoffs und/oder der Bauteilschicht (42, 44) zumindest im Bereich einer Aufbau- und Fügezone der Vorrichtung umfasst.

12. Verfahren zur induktiven Erwärmung von Bauelementen oder eines Bauteilwerkstoffs, insbesondere zur Herstellung eines Bauteils einer Strömungsmaschine, umfassend zumindest folgende Schritte:
- Bereitstellung wenigstens einer Induktionsheizvorrichtung (10) umfassend mindestens eine erste Induktionsspule (12) mit wenigstens einer Windung (14) mit einer vorbestimmten inneren Windungsfläche (16) und mindestens ein relativ zur ersten Induktionsspule (12) bewegbares Induktionsspulenpaket (18) mit wenigstens zwei Induktionsspulen (20, 22, 24), wobei die Induktionsspulen (20, 22, 24) des Induktionsspulenpakets (18) jeweils wenigstens eine Windung (26, 28, 30) mit vorbestimmten inneren Windungsflächen (32, 34, 36) aufweisen und die jeweiligen inneren Windungsflächen (32, 34, 36) der einzelnen Induktionsspulen (20, 22, 24) des Induktionsspulenpakets (18) kleiner sind als die innere Windungsfläche (16) der ersten Induktionsspule (12); und
- Verfahren und Aktivieren der ersten Induktionsspule (12) und/oder wenigstens einer Induktionsspule (22, 24, 26) des Induktionsspulenpakets (18) zur zumindest teilweisen induktiven Erwärmung von unterschiedliche Querschnitte und/oder Geometrien aufweisenden Bauteilabschnitten des aus dem Bauteilwerkstoff herzustellenden Bauelements oder einer Bauteilschicht (42, 44) des Bauelements vor, während und/oder nach der Belichtung mittels eines Hochenergiestrahls (46).

13. Verfahren nach Anspruch 12,
**dadurch gekennzeichnet, dass**
das Verfahren und die Aktivierung der ersten Induktionsspule (12) und/oder der jeweiligen Induktionsspulen (20, 22, 24) des Induktionsspulenpakets (18) jeweils in Abhängigkeit des Querschnitts und/oder der Geometrie der herzustellenden Bauteilschicht (42, 44) gesteuert wird, derart, dass eine Aktivierung einer Induktionsspule (12, 20, 22, 24) entsprechend dem Verhältnis der Größe ihrer inneren Windungsfläche (16, 32, 34, 36) zur Größe der zu erwärmenden Fläche und/oder des zu erwärmenden Bereichs des Bauteilwerkstoffs oder der Bauteilschicht (42, 44) oder des Bauteilabschnitts erfolgt.

14. Verfahren nach Anspruch 13,
**dadurch gekennzeichnet, dass**
das Induktionsspulen (12) mit größeren inneren Windungsflächen (16) zur Erwärmung größerer Flächen und/oder Bereiche des Bauteilwerkstoffs oder der Bauteilschicht (42) oder des Bauteilabschnitts und Induktionsspulen (20, 22, 24) mit kleineren inneren Windungsflächen (32, 34, 36) zur Erwärmung kleinerer Flächen und/oder Bereiche des Bauteilwerkstoffs oder der Bauteilschicht (44) oder des Bauteilabschnitts, aktiviert werden.

## Claims

1. Induction heating device, in particular for use in a device for the additive manufacturing of at least one component region of a component, in particular a component of a turbomachine, comprising at least one first induction coil (12) that has at least one turn (14) having a predetermined inner turn surface (16), **characterized in that** the induction heating device (10) comprises at least one induction coil assembly (18) which can be moved relative to the first induction coil (12) and which has at least two induction coils (20, 22, 24), the induction coils (20, 22, 24) of the induction coil assembly (18) each having at least one turn (26, 28, 30) having predetermined inner turn surfaces (32, 34, 36) and the inner turn surfaces (32, 34, 36) of the individual induction coils (20, 22, 24) of the induction coil assembly (18) each being smaller than the inner turn surface (16) of the first induction coil (12).

2. Induction heating device according to claim 1, **characterized in that** at least two inner turn surfaces (32, 34, 36) of the individual induction coils (20, 22, 24) of the induction coil assembly (18) have different sizes.

3. Induction heating device according to either claim 1 or claim 2, **characterized in that** the size of the inner turn surfaces (16, 32, 34, 36) corresponds to a relative size of a relevant effect field of the individual induction coils (12, 20, 22, 24).

4. Induction heating device according to any of the preceding claims, **characterized in that** the turns (16, 26, 28, 30) of the induction coils (12, 20, 22, 24) are arranged side by side and/or one inside the other in one plane and/or in different planes or one above the other in different planes with respect to one another.

5. Induction heating device according to any of the preceding claims, **characterized in that** at least one of the induction coils (12, 20, 22, 24) has a plurality of turns arranged one above the other and/or the induction coils (12, 20, 22, 24) of the device (10) have the same or different numbers of turns.

6. Induction heating device according to any of the preceding claims, **characterized in that** the first induction coil (12) and/or the induction coil assembly (18) and/or the individual induction coils (22, 24, 26) of the induction coil assembly (18) are designed to be movable.

7. Induction heating device according to any of the preceding claims, **characterized in that** at least one turn (14) of the first induction coil (12) and/or at least one turn (26, 28, 30) of the induction coil assembly (18) is designed to be movable in a plane approximately parallel to a construction platform of the device for the additive manufacturing of components and/or approximately perpendicular thereto.

8. Induction heating device according to any of the preceding claims, **characterized in that** the induction heating device (10) comprises at least one control unit for controlling the position of the induction coils (12, 20, 22, 24) with respect to one another and/or for activating and deactivating the induction coils (12, 20, 22, 24).

9. Induction heating device according to any of the preceding claims, **characterized in that** the induction coils (20, 22, 24) of the induction coil assembly (18) have a circular, semicircular, oval, U-shaped, V-shaped, horseshoe-shaped, square, rectangular or polygonal turn geometry in plan view.

10. Device for the additive manufacturing of at least one component region of a component, in particular a component of a turbomachine, comprising at least one induction heating device (10) for heating a component material and/or a component layer (42, 44) produced therefrom before, during and/or after exposure by means of a high energy beam (46), according to claims 1 to 9.

11. Device according to claim 10, **characterized in that** the device comprises at least one temperature measuring apparatus for continuous or non-continuous temperature measurement of the component material and/or the component layer (42, 44) at least in the region of an assembly and joining zone of the device.

12. Method for inductively heating components or a component material, in particular for producing a component of a turbomachine, comprising at least the following steps:
- providing at least one induction heating device (10) comprising at least one first induction coil (12) that has at least one turn (14) having a predetermined inner turn surface (16) and at least one induction coil assembly (18) which can be moved relative to the first induction coil (12) and has at least two induction coils (20, 22, 24), the induction coils (20, 22, 24) of the induction coil assembly (18) each having at least one turn (26, 28, 30) having predetermined inner turn surfaces (32, 34, 36) and the inner turn surfaces (32, 34, 36) of the individual induction coils (20, 22, 24) of the induction coil assembly (18) each being smaller than the inner turn surface (16) of the first induction coil (12); and
- moving and activating the first induction coil (12) and/or at least one induction coil (22, 24, 26) of the induction coil assembly (18) in order to at least partially inductively heat component portions of the component to be produced from the component material or a component layer (42, 44) of the component that have different cross sections and/or geometries before, during and/or after exposure by means of a high-energy beam (46).

13. Method according to claim 12, **characterized in that** moving and activating the first induction coil (12) and/or the respective induction coils (20, 22, 24) of the induction coil assembly (18) is controlled in each case depending on the cross section and/or the geometry of the component layer (42, 44) to be produced, such that an induction coil (12, 20, 22, 24) is activated in accordance with the ratio of the size of its inner turn surface (16, 32, 34, 36) to the size of the surface to be heated and/or the region of the component material or the component layer (42, 44) or the component portion to be heated.

14. Method according to claim 13, **characterized in that** the induction coils (12) having larger inner turn surfaces (16) are activated for heating larger surfaces and/or regions of the component material or the component layer (42) or the component portion, and induction coils (20, 22, 24) having smaller inner turn surfaces (32, 34, 36) are activated for heating smaller surfaces and/or regions of the component material or the component layer (44) or the component portion.

## Revendications

1. Dispositif de chauffage par induction, en particulier destiné à être utilisé dans un dispositif destiné à la fabrication additive d'au moins une zone d'un composant, en particulier d'un composant d'une turbomachine, comprenant au moins une première bobine d'induction (12) comportant au moins une spire (14) comportant une surface interne de spire prédéterminée (16),
**caractérisé en ce que**
le dispositif de chauffage par induction (10) comprend au moins un ensemble de bobines d'induction (18) pouvant être déplacé par rapport à la première bobine d'induction (12) et comportant au moins deux bobines d'induction (20, 22, 24), les bobines d'induction (20, 22, 24) de l'ensemble de bobines d'induction (18) présentant respectivement au moins une spire (26, 28, 30) comportant des surfaces internes de spires prédéterminées (32, 34, 36), et les surfaces internes de spires respectives (32, 34, 36) des bobines d'induction individuelles (20, 22, 24) de l'ensemble de bobines d'induction (18) étant plus petites que la surface interne de spire (16) de la première bobine d'induction (12).

2. Dispositif de chauffage par induction selon la revendication 1,
**caractérisé en ce qu'**
au moins deux surfaces internes de spire (32, 34, 36) des bobines d'induction individuelles (20, 22, 24) de l'ensemble de bobines d'induction (18) présentent des tailles différentes.

3. Dispositif de chauffage par induction selon la revendication 1 ou 2,
**caractérisé en ce que**
la taille des surfaces internes de spire (16, 32, 34, 36) correspond à une taille relative d'un champ effectif respectif des bobines d'induction individuelles (12, 20, 22, 24).

4. Dispositif de chauffage par induction selon l'une des revendications précédentes,
**caractérisé en ce que**
les spires (16, 26, 28, 30) des bobines d'induction (12, 20, 22, 24) sont disposées les unes à côté des autres et/ou les unes dans les autres dans un même plan et/ou dans différents plans, ou les unes au-dessus des autres dans différents plans.

5. Dispositif de chauffage par induction selon l'une des revendications précédentes,
**caractérisé en ce qu'**
au moins l'une des bobines d'induction (12, 20, 22, 24) présente une pluralité de spires disposées les unes au-dessus des autres, et/ou **en ce que** les bobines d'induction (12, 20, 22, 24) du dispositif (10) présentent un nombre de spires identique ou différent.

6. Dispositif de chauffage par induction selon l'une des revendications précédentes,
**caractérisé en ce que**
la première bobine d'induction (12) et/ou l'ensemble de bobines d'induction (18) et/ou les bobines d'induction individuelles (22, 24, 26) de l'ensemble de bobines d'induction (18) sont conçus de façon à être mobiles.

7. Dispositif de chauffage par induction selon l'une des revendications précédentes,
**caractérisé en ce qu'**
au moins une spire (14) de la première bobine d'induction (12) et/ou au moins une spire (26, 28, 30) de l'ensemble de bobines d'induction (18) sont conçues de façon à être mobiles dans un plan sensiblement parallèle à une plate-forme de construction du dispositif de fabrication additive de composants et/ou sensiblement perpendiculaire à celle-ci.

8. Dispositif de chauffage par induction selon l'une des revendications précédentes,
**caractérisé en ce que**
le dispositif de chauffage par induction (10) comprend au moins une unité de commande destinée à commander la position des bobines d'induction (12, 20, 22, 24) les unes par rapport aux autres et/ou à activer et à désactiver les bobines d'induction (12, 20, 22, 24).

9. Dispositif de chauffage par induction selon l'une des revendications précédentes,
**caractérisé en ce que**
les bobines d'induction (20, 22, 24) de l'ensemble de bobines d'induction (18) présentent, vues d'en haut, une géométrie de spire circulaire, semi-circulaire, ovale, en forme de U, en forme de V, en forme de fer à cheval, carrée, rectangulaire ou polygonale.

10. Dispositif destiné à la fabrication additive d'au moins une zone d'un composant, en particulier d'un composant d'une turbomachine, comprenant au moins un dispositif de chauffage par induction (10) destiné à chauffer un matériau de composant et/ou une couche de composant (42, 44) fabriquée à partir de celui-ci avant, pendant et/ou après irradiation au moyen d'un faisceau à haute énergie (46), selon les revendications 1 à 9.

11. Dispositif selon la revendication 10,
**caractérisé en ce qu'**
il comprend au moins un système de mesure de température servant à mesurer de façon continue ou non continue la température du matériau de composant et/ou de la couche de composant (42, 44) au moins dans la zone d'une région de construction et d'assemblage du dispositif.

12. Procédé destiné au chauffage par induction d'éléments structuraux ou d'un matériau de composant, en particulier destiné à fabriquer un composant d'une turbomachine, comprenant au moins les étapes suivantes :
- de mise à disposition d'au moins un dispositif de chauffage par induction (10) comprenant au moins une première bobine d'induction (12) comportant au moins une spire (14) comportant une surface interne de spire prédéterminée (16) et au moins un ensemble de bobines d'induction (18) pouvant être déplacé par rapport à la première bobine d'induction (12) et comportant au moins deux bobines d'induction (20, 22, 24), les bobines d'induction (20, 22, 24) de l'ensemble de bobines d'induction (18) présentant respectivement au moins une spire (26, 28, 30) comportant des surfaces internes de spire prédéterminées (32, 34, 36), et les surfaces internes de spire respectives (32, 34, 36) des bobines d'induction individuelles (20, 22, 24) de l'ensemble de bobines d'induction (18) étant plus petites que la zone interne de spire (16) de la première bobine d'induction (12) ; et
- de procédé et d'activation de la première bobine d'induction (12) et/ou d'au moins une bobine d'induction (22, 24, 26) de l'ensemble de bobines d'induction (18) destinées au chauffage au moins partiellement inductif de sections de composant, lesquelles présentent différentes sections transversales et/ou géométries, de l'élément structural à fabriquer à partir du matériau du composant ou d'une couche de composant (42, 44) de l'élément structural, avant, pendant et/ou après irradiation au moyen d'un faisceau à haute énergie (46).

13. Procédé selon la revendication 12,
**caractérisé en ce que**
le procédé et l'activation de la première bobine d'induction (12) et/ou des bobines d'induction respectives (20, 22, 24) de l'ensemble de bobines d'induction (18) sont respectivement commandés en fonction de la section transversale et/ou de la géométrie de la couche de composants (42, 44) à fabriquer, de telle sorte qu'une bobine d'induction (12, 20, 22, 24) est activée conformément au rapport de la taille de sa surface interne de spire (16, 32, 34, 36) par rapport à la taille de la surface à chauffer et/ou de la zone du matériau de composant ou de la couche de composant (42, 44) ou de la section de composant à chauffer.

14. Procédé selon la revendication 13,
**caractérisé en ce que**
les bobines d'induction (12) comportant de grandes surfaces internes de spire (16) sont activées pour chauffer de grandes surfaces et/ou zones du matériau de composant ou de la couche de composant (42) ou de la section de composant, et **en ce que** les bobines d'induction (20, 22, 24) comportant de petites surfaces internes de spire (32, 34, 36) sont activées pour chauffer de petites surfaces et/ou zones du matériau de composant ou de la couche de composant (44) ou de la section de composant.
